# EUROPEAN PATENT SPECIFICATION

(11) **EP 1 774 191 B1**
(45) Date of publication and mention of the grant of the patent: **16.12.2009**
(21) Application number: 05773469.1
(22) Date of filing: 21.07.2005
(51) Int. Cl.: F16D 3/84

(54) **SEALING BELLOWS WITH LUBRICANT RESERVOIR AT AXIAL END AND ASSEMBLY/INSTALLATION METHOD**
DICHTUNGSBÄLGE MIT SCHMIERMITTELBEHÄLTER AM ACHSENENDE UND MONTAGE-/INSTALLATIONSVERFAHREN
SOUFFLETS D'ETANCHEITE AVEC RESERVOIR DE LUBRIFIANT A L'EXTREMITE AXIALE ET PROCEDE D'ASSEMBLAGE/INSTALLATION

(30) Priority: 22.07.2004 US 896498
(43) Date of publication of application: 18.04.2007
(73) Proprietor: ZF Friedrichshafen AG, 88046 Friedrichshafen (DE)
(72) Inventor: FISCHER, Markus, Northville, Michigan 48167 (US); HOLMES, Eric, Ann Arbor, Michigan 48103 (US); DEARING, Daniel, Northville, Michigan 48167 (US)
(86) International application number: PCT/US2005/025980
(87) International publication number: WO 2006/012479

(56) References cited:
- US-A- 3 250 556
- US-A- 4 241 928
- US-A- 6 145 181
- US-A1- 2003 156 896
- US-A1- 2003 223 806
- PATENT ABSTRACTS OF JAPAN vol. 1998, no. 06, 30 April 1998 (1998-04-30) & JP 10 038083 A (AKEBONO BRAKE IND CO LTD), 13 February 1998 (1998-02-13)

## Description

### FIELD OF THE INVENTION

The present invention relates generally to joints and more particularly to a ball and socket joint assembly with a bellows or sealing boot and to the sealing boot.

### BACKGROUND OF THE INVENTION

Ball and socket joins are known that have a sealing boot connected at one end to a housing of the ball joint and connected at another end to a knuckle (the connected piece or mating part - connected to the ball pin) and/or to the ball stud (ball pin). The end of the sealing boot is either directly applied to the ball stud or knuckle or is applied by the use of a sealing ring.

Sealing boots that are lubricated on the axial side to improve sliding behavior are known.

US 6,145,181 reveals a ball joint with a sealing boot layout according to the preamble of claim 1, whereby a groove for integrating a lubricant is provided in the pin-side edge of the sealing boot. This lubricant-filled groove is located on that surface of the sealing boot edge which lies on the pin. The groove reveals an opening versus the pin, which extends across the entire width of the groove. Furthermore the US 3,250,556 shows a ball joint with a sealing boot layout, whereby the pin-side edge of the sealing boot reveals a self-lubricating low-friction bearing surface for mounting on a chassis component or the like. No groove for integrating a lubricant within the sealing boot edge is planned in this document.

### SUMMARY OF THE INVENTION

It is an object of the invention to provide a sealing bellows (sealing boot) for a joint that has an axial end (facing the knuckle) that is lubricated at the knuckle contact surface without getting on other joint parts (such as the ball stud).

It is an object of the invention to provide a sealing boot (bellows seal) to ball and socket joint part assembly and method of assembling that presents a good seal, particularly in an axial direction of the sealing boot and knuckle and in which the lubricant is protected in position on the sealing boot during shipment and is released in a simple manner on final assembly.

According to the invention, a ball and socket joint with a bellows seal is defined in claim 1.

The cavity may have an annular engagement surface side closed by one of a material of the sealing bellows and a membrane applied to the sealing bellows. The annular engagement surface side opening may allow a release of lubricant upon assembly.

The sealing bellows at the cavity may have a lubricant retaining portion defined by one of a narrowed gap and a material barrier at an entrance of the cavity. The lubricant retaining portion acts to retain at least a portion of the lubricant in the groove in a pre-assembly state prior to the annular engagement surface contacting the sealing face.

The bellows seal element may also have a pivot pin sealing surface engaged with the pivot pin. A clamping ring may be applied acting on an outside of the bellows to apply force to the bellows such that the pivot pin sealing surface statically engages with the pivot pin.

According to a further aspect of the invention, a process is provided for forming a ball and socket joint with a bellows seal according to claim 6. location between the annular engagement surface and the radially extending surface of the connection part.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which preferred embodiments of the invention are illustrated.

### BRIEF DESCRIPTION OF THE DRAWINGS

Figure 1 is a sectional cutaway view showing an axial end of the boot seal with lubricant groove, pocket or pore according to the invention;

Figure 2 is a sectional cutaway view showing an axial end of the boot seal that is pressed so lubricant in the lubricant groove, pocket or pore is released;

Figure 3A is a sectional view of a knuckle facing side (axial end) of the sealing boot with lubricant groove, pocket or pore covered at least partially by a film or membrane (with or without perforation) or material flaps;

Figure 3B is a sectional view of an alternative embodiment of the sealing boot at a knuckle facing side (axial end) of the sealing boot with lubricant groove, pocket or pore having a restricted dimension opening;

Figure 4 is a partial sectional view of a ball joint ball and pin seated in a housing connected to a bellows (sealing boot) according to the invention;

Figure 5 is a sectional view showing a connected piece (knuckle) with a bellows contact surface (upper surface);

Figure 6A is a sectional view showing a state of assembly with the sealing boot contacting the knuckle contact surface;

Figure 6B is a sectional view showing another state of assembly as the ball pin advances with respect to the connected piece;

Figure 6C is a sectional view showing the assembled state;

Figure 7A is an enlarged sectional view showing the sealing boot in a pre-assembly state, relatively positioned for engagement; and

Figure 7B is an enlarged sectional view showing the sealing boot and knuckle;

### DESCRIPTION OF THE PREFERRED EMBODIMENT

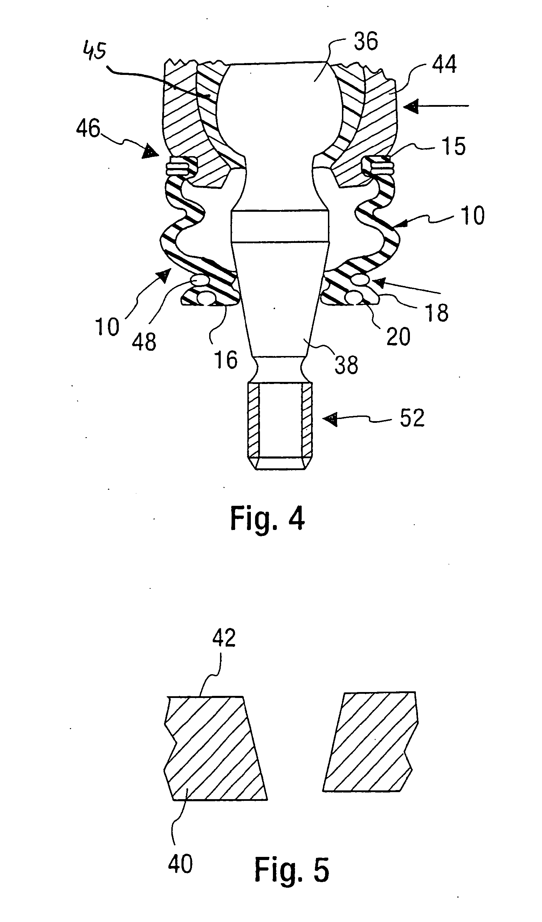

Referring to the drawings in particular, the invention comprises a sealing bellows or sealing boot generally designated 10. The sealing boot 10 has a housing end 15 (see Figure 4) and a connection piece end 18. The connection piece end 18 has an annular surface 16 with an a cavity 20 in the form of an annular lubricant groove or pocket. The cavity is filled at least partially with a lubricant 22. The cavity 20 is closed on one side by material forming flaps 30.

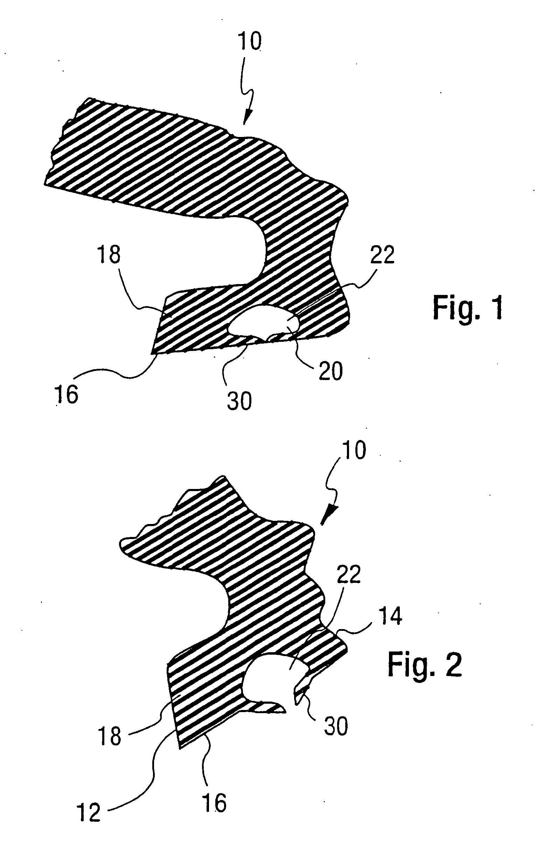

Figure 2 shows the sealing boot 10 with the end 18 pressed at an inside 14 relative to an outside 12. The pressing at side 14 results in pressure on the lubricant 22, such that the flaps 30 are urged outwardly and lubricant 22 can flow through a gap between flaps 30.

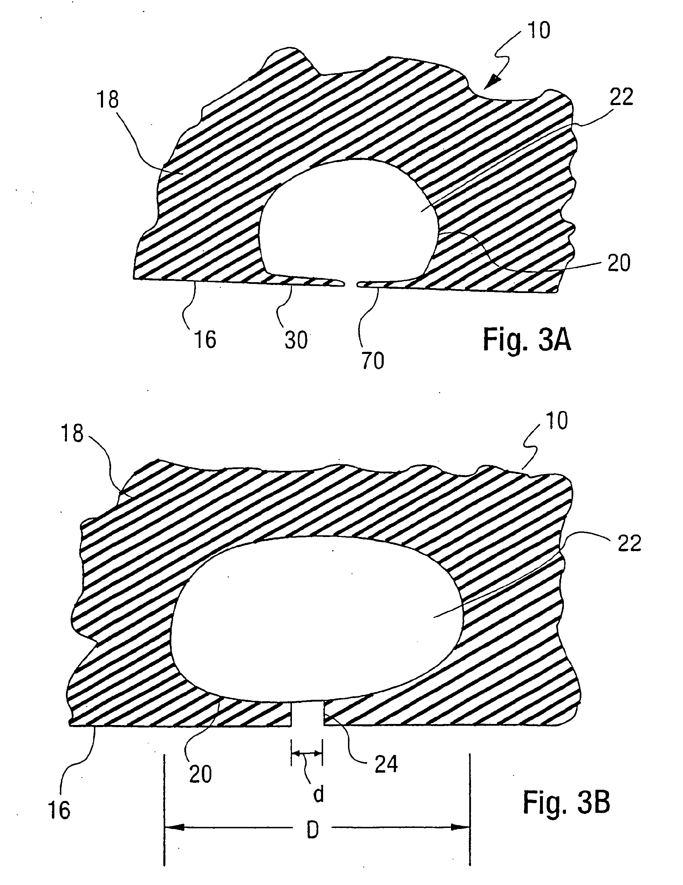

The pore, pocket or groove 20 provided with a lubricant 22 is shown in Figure 3A. This lubricant 22 may be supplied in a preassembled state with the lubricant 22 already in position within the cavity 20. According to the embodiment of Figs. 1, 2 and 3A, flaps 30 or a film or membrane thickness of material 70 is integrally formed with the sealing boot 10. The material 70 may extend uninterrupted across the lubricant cavity 20 or have a gap as shown in Fig. 3A. If no gap is provided, the lubricant 22 is injected through the membrane or material 70. The cavity 20 as shown in Fig. 3A is covered with flaps 30 extending from each sidewall at the surface 16. Prior to forming an assembly with the sealing boot 10, the lubricant 22 is fed into the groove 20, passing through the gap in the flaps 30. The flaps 30 effectively retain the lubricant 22 within the groove 20 until the surface 16 is positioned in an assembly position, in which case the lubricant is pressed out of the groove 20, as discussed further below.

Figure 3B shows an alternative embodiment of the cavity 20. The cavity or groove 20 cooperates with the surface 16 to defme a gap 24. The gap 24 may have an advantageous ratio of the width d of the gap 24 to the width D of the cavity or groove 20. With a sufficiently small dimension d, the lubricant may be substantially retained in the space 22, even during shipping and handling. Further, a film may be applied over the gap 24 during shipping and handling. The lubricant may also be retained with a membrane formed integrally with sealing boot 18 wherein the lubricant is injected through the membrane. The membrane may then be broken to release the lubricant or preferably the lubricant is pressed out of the groove 20 during the assembly steps in which the membrane is broken or ruptured by the pressing (and from the internal pressure of the lubricant 22). The membrane may be perforated to define a weak area to rupture for lubricant 22 to be squeezed out of the cavity 20. The material 70 may have such a perforation or be precut to form the flaps 30 or such that flaps 30 form as the lubricant flows out of cavity 20 and the barrier 70 is ruptured.

Although the examples show the cavity 20 as a groove or continuous annular pocket 20, the cavity 20 may also be provided as one of several discrete pockets or pores that each have lubricant and retain the lubricant in any manner as described above. The material 70 may either be molded with the material of sealing boot 10 or the material to restrict passage of the lubricant may be applied to the already molded sealing boot 10.

The sealing boot 10 is advantageously used with a ball and socket joint including a ball 36 with a pin 38 as shown in Figure 4. The ball 36 is seated in a housing 44 via an intermediate bearing insert 45. The pin 38 is connected to a connecting piece or knuckle 40. The sealing boot 10 is connected at end 15 to the housing 44 via a clamping ring 46. The end 18 of sealing boot 10 is connected to the pin 38 by a clamping ring 48.

Figure 5 shows the knuckle 40 with a sealing boot facing surface 42. The surface 42 cooperates with the sealing boot surface 16 to form a seal between the sealing boot 10 and knuckle 40.

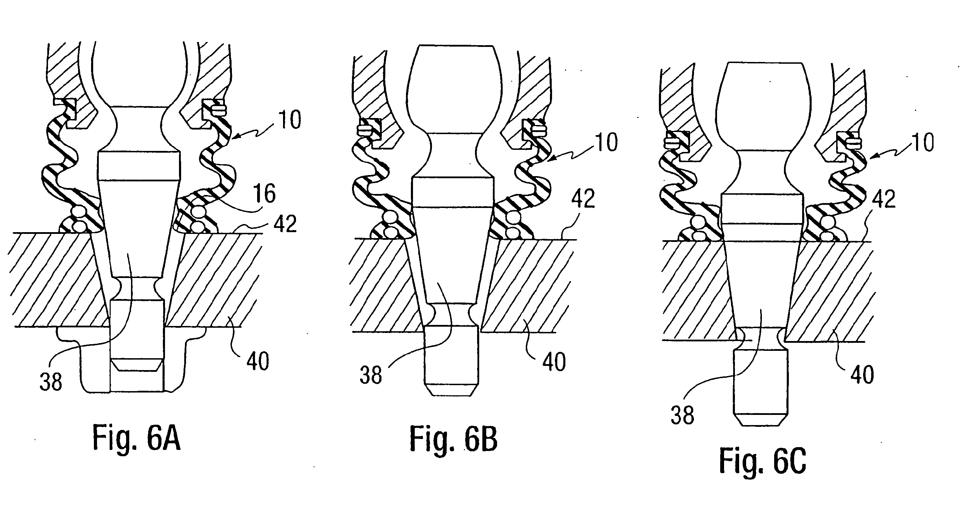

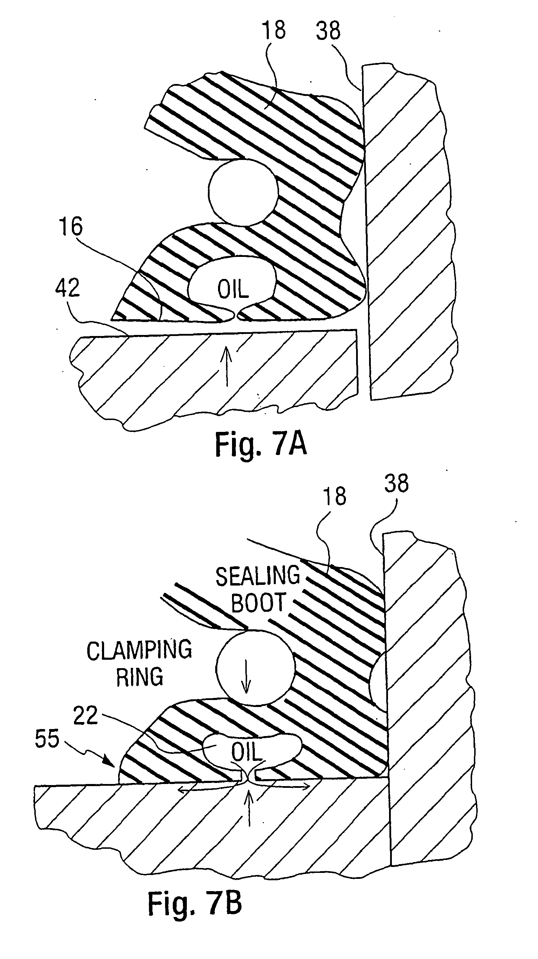

Figure 6A - 6C show the assembly process in which a tapered surface of the pin 38 is seated in contact with the tapered surface of the knuckle 40. In figure 7A the surface 16 is positioned over the surface 42 (see also Figure 7A). With the movement of the stud 38 into a seated position in the opening of the knuckle 40 the sealing boot 10 applies force toward the knuckle 40. Some amount of lubricant 22 may exit the space 22 for reducing friction for relative slip between sealing boot 10 and slipping ring 14 and for improving sealing characteristics. As shown in Figure 7B, a good seal is provided based on the water ingress path 55 passing through to lubricant 22.

While specific embodiments of the invention have been shown and described in detail to illustrate the application of the principles of the invention, it will be understood that the invention may be embodied otherwise without departing from such principles.

### APPENDIX

### LIST OF REFERENCE NUMBERS

sealing bellows or sealing boot 10
an outside 12
an inside 14
housing end 15
annular surface 16
connection piece end 18
cavity, pore, pocket or groove 20
lubricant 22
gap 24
material forming flaps 30
ball 36
pin 38
connecting piece or knuckle 40
sealing boot facing surface 42
housing 44
intermediate bearing insert 45
clamping ring 46
clamping ring 48
water ingress path 55
a film or membrane thickness of material 70
width D
dimension d

## Claims

1. A ball and socket joint with a bellows seal, the ball and socket joint comprising:
a ball pivot pin (38) with a connection piece;
a sealing bellows (10) with an annular engagement surface (16) with a cavity (20);
a connecting piece (40) with a radially extending sealing boot facing surface (42) having an opening for receiving the ball pivot pin (38);
lubricant (22) disposed in said cavity (20) prior to assembly of the ball and socket joint, the annular engagement surface (16) contacting said radially extending sealing boot facing surface (42) upon assembly to cause an amount of lubricant (22) to be squeezed out of said cavity (20),
**characterised in,**
**that** said cavity is a groove (20) with an annular opening in the form of a narrowed entrance gap (26) with a flap portion (30) at each side of said opening, to restrict movement of the lubricant (20) from said cavity (22) until assembly.

2. A ball and socket joint with a bellows seal according to claim 1, wherein said cavity (20) has an annular engagement surface side (16) closed by one of a material of said sealing bellows (10) and membrane (70) applied to said sealing bellows (10), said annular engagement surface side (16) opening to allow a release of lubricant (22) upon assembly.

3. A ball and socket joint with a bellows seal according to claim 1, wherein said sealing bellows (10) at said cavity (20) has a lubricant retaining portion defined by one of a narrowed gap (26) and a material barrier at an entrance of said cavity, said lubricant retaining portion acting to retain at least a portion of said lubricant (22) in said cavity (20) in a pre-assembly state prior to said annular engagement surface (16) contacting said radially extending sealing boot facing surface (42).

4. A ball and socket joint with a bellows seal according to claim 1, wherein said bellows seal element (10) has a pivot pin sealing surface (14) engaged with said pivot pin (38).

5. A ball and socket joint with a bellows seal according to claim 4, further comprising a clamping ring (48) acting on an outside (12) of the bellows (10) to apply force to the bellows (10) such that the pivot pin sealing surface (14) statically engages with said pivot pin (38).

6. A process for forming a ball and socket joint with a bellows seal, the process comprising:
providing a ball pivot pin (36, 38) seated in a ball joint housing (44) via an intermediate bearing insert (45);
providing a connecting part (40) with a radially extending sealing boot facing surface (42) having an opening for receiving the ball pivot pin (38);
providing a bellows (10) with a first connection end with an annular housing connection surface (15) and another end with an annular engagement surface (16) having a cavity (20) at least partially filled with a lubricant (22), **characterised in, that** said cavity is a groove (20) with an annular opening in the form of a narrowed entrance gap (26) with a flap portion (30) at each side of said opening to restrict movement of the lubricant (22) from said cavity (20) until assembly;
connecting the bellows (10) to the housing (44);
moving said ball pivot pin (36, 38) into the opening of the connection part (40) and contacting said annular engagement surface (16) of said bellows (10) to said radially extending sealing boot facing surface (42) of said connection part to release lubricant (22) from said cavity (20) to a location between said annular engagement surface (16) and said radially extending surface (42) of said connection part (40).

7. A process according to claim 6, wherein said cavity has an annular engagement surface side (16) closed by one of a material of said sealing bellows (10) and membrane (70) applied to said sealing bellows, said annular engagement surface side opening to allow a release of lubricant (22) upon assembly.

8. A process according to claim 6, wherein said sealing bellows (10) at said cavity has a lubricant retaining portion defined by one of a narrowed gap (26) and a material barrier at an entrance of said cavity (29), said lubricant (22) retaining portion acting to retain at least a portion of said lubricant in said sliding ring groove in a pre-assembly state prior to said annular engagement surface (16) contacting said radially extending sealing boot facing surface (42).

## Patentansprüche

1. Kugelgelenk mit Balgdichtung, wobei das Kugelgelenk Folgendes aufweist:
einen Gelenkzapfen (38) mit einem Verbindungsteil;
einen Dichtungsbalg (10) mit einer ringförmigen Eingriffsfläche (16) mit einem Hohlraum (20);
einen Verbindungsteil (40) mit einer sich radial erstreckenden Dichtmuffen-Passfläche (42), die eine Öffnung zum Aufnehmen des Gelenkzapfens (38) hat;
Schmiermittel (22), das in dem Hohlraum (20) vor dem Zusammenbauen des Kugelgelenks angeordnet wird, wobei die ringförmige Eingriffsfläche (16) die sich radial erstreckende Dichtmuffen-Passfläche (42) beim Zusammenbauen berührt, so dass veranlasst wird, dass eine Menge Schmiermittel (22) aus dem Hohlraum (20) gequetscht wird,
**dadurch gekennzeichnet,**
**dass** der Hohlraum eine Hohlkehle (20) mit einer ringförmigen Öffnung in der Form einer verengten Eingangsspalte (26) mit einem Klappenabschnitt (30) auf jeder Seite der Öffnung ist, um die Bewegung des Schmiermittels (20) aus dem Hohlraum (22) bis zum Zusammenbauen einzuschränken.

2. Kugelgelenk mit Balgdichtung nach Anspruch 1, wobei der Hohlraum (20) eine ringförmige Eingriffsflächenseite (16) hat, die von einem Material des Dichtungsbalgs (10) und der Membran (70) verschlossen ist, die an den Dichtungsbalg (10) angelegt wird, wobei sich die ringförmige Eingriffsflächenseite (16) öffnet, um ein Freigeben von Schmiermittel (22) beim Zusammenbauen zu gestatten.

3. Kugelgelenk mit Balgdichtung nach Anspruch 1, wobei der Dichtungsbalg (10) an dem Hohlraum (20) einen Schmiermittelrückhalteabschnitt hat, der durch eine verengte Spalte (26) und eine materielle Barriere an einem Eingang des Hohlraums definiert ist, wobei der Schmiermittelrückhalteabschnitt das Zurückhalten mindestens eines Teils des Schmiermittels (22) in dem Hohlraum (20) in einem Zustand vor dem Zusammenfügen mit der ringförmigen Eingriffsfläche (16), die die sich radial erstreckende Dichtmuffen-Passfläche (42) berührt, bewirkt.

4. Kugelgelenk mit Balgdichtung nach Anspruch 1, wobei der Dichtungsbalg (10) eine Gelenkzapfen-Dichtfläche (14) hat, die in den Gelenkzapfen (38) eingreift.

5. Kugelgelenk mit Balgdichtung nach Anspruch 4, das ferner einen Klemmring (48) aufweist, der auf eine Außenseite (12) des Dichtungsbalgs (10) einwirkt, um Kraft an den Dichtungsbalg (10) derart anzulegen, dass die Gelenkzapfen-Dichtfläche (14) statisch in den Gelenkzapfen (38) eingreift.

6. Verfahren zum Bilden eines Kugelgelenks mit Balgdichtung, wobei das Verfahren Folgendes aufweist:
Bereitstellen eines Gelenkzapfens (36, 38), der in einem Kugelgelenkgehäuse (44) sitzt, über einen Zwischenlagereinsatz (45),
Bereitstellen eines Verbindungsteils (40) mit einer sich radial erstreckenden Dichtmuffen-Passfläche (42), die eine Öffnung zum Aufnehmen des Gelenkzapfens (38) hat;
Bereitstellen eines Dichtungsbalgs (10) mit einem ersten Verbindungsende mit einer ringförmigen Gehäuseverbindungsfläche (15) und einem anderen Ende mit einer ringförmigen Eingriffsfläche (16), die einen Hohlraum (20) hat, der mindestens teilweise mit einem Schmiermittel (22) gefüllt ist,
**dadurch gekennzeichnet, dass**
der Hohlraum eine Hohlkehle (20) mit einer ringförmigen Öffnung in der Form einer verengten Eingangsspalte (26) mit einem Klappenabschnitt (30) an jeder Seite der Öffnung ist, um die Bewegung des Schmiermittels (22) von dem Hohlraum (20) bis zum Zusammenbauen einzuschränken;
Verbinden des Dichtungsbalgs (10) mit dem Gehäuse (44) ;
Bewegen des Gelenkzapfens (36, 38) in der Öffnung des Verbindungsteils (40) und Berühren der ringförmigen Eingriffsfläche (16) des Dichtungsbalgs (10) mit der sich radial erstreckenden Dichtmuffen-Passfläche (42) des Verbindungsteils, um Schmiermittel (22) aus dem Hohlraum (20) an einer Stelle zwischen der ringförmigen Eingriffsfläche (16) und der sich radial erstreckenden Fläche (42) des Verbindungsteils (40) freizugeben.

7. Verfahren nach Anspruch 6, wobei der Hohlraum eine ringförmige Eingriffsflächenseite (16) hat, die durch ein Material des Dichtungsbalgs (10) oder der Membran (70), die an den Dichtungsbalg angelegt ist, verschlossen ist, wobei sich die ringförmige Eingriffsflächenseite öffnet, um ein Freigeben von Schmiermittel (22) beim Zusammenbauen zu erlauben.

8. Verfahren nach Anspruch 6, wobei der Dichtungsbalg (10) an dem Hohlraum einen Schmiermittelrückhalteabschnitt hat, der von einer verengten Spalte (26) definiert ist, und eine materielle Barriere an einem Eingang des Hohlraums (29), wobei der Schmiermittelrückhalteabschnitt (22) wirkt, um mindestens einen Teil des Schmiermittels in der Gleitringhohlkehle in einem Zustand vor dem Zusammenbauen mit der ringförmigen Eingriffsfläche (16), die die sich radial erstreckende Dichtmuffen-Passfläche (42) berührt, zurückzuhalten.

## Revendications

1. Bille et articulation à rotule comprenant un soufflet d'étanchéité, la bille et l'articulation à rotule comprenant
un axe d'articulation à bille (38) avec une pièce de liaison ;
un soufflet d'étanchéité (10) avec une surface d'engagement annulaire (16) avec une cavité (20) ;
une pièce de liaison (40) avec une surface faisant face au soufflet et s'étendant radialement (42) présentant une ouverture pour recevoir l'axe d'articulation à bille (38) ;
un lubrifiant (22) placé dans ladite cavité (20) avant l'assemblage de la bille et de l'articulation à bille, la surface d'engagement annulaire (16) se mettant en contact avec ladite surface faisant face au soufflet et s'étendant radialement (42) lors de l'assemblage pour faire sortir une quantité de lubrifiant (22) hors de ladite cavité (20),
**caractérisé en ce que**
ladite cavité est une rainure (20) avec une ouverture annulaire sous la forme d'un écart à entrée rétrécie (26) avec une partie à battant(30) sur chaque côté de ladite ouverture afin de restreindre le mouvement du lubrifiant (22) depuis ladite cavité (20) jusqu'à l'assemblage.

2. Bille et articulation à rotule comprenant un soufflet d'étanchéité selon la revendication 1 dans lesquels ladite cavité (20) présente une surface d'engagement annulaire (16) fermée par l'un matériau dudit soufflet d'étanchéité (10) et une membrane (70) appliquée audit soufflet d'étanchéité (10), ladite surface d'engagement annulaire (16) s'ouvrant pour permettre la libération du lubrifiant (22) à l'assemblage.

3. Bille et articulation à rotule comprenant un soufflet d'étanchéité selon la revendication 1 dans lesquels ledit soufflet d'étanchéité (10) sur ladite cavité (20) possède une partie de retenue de lubrifiant définie par l'un écart rétréci (26) et une barrière de matériau à une entrée de ladite cavité, ladite partie de retenue de lubrifiant agissant pour retenir au moins une partie dudit lubrifiant (22) dans ladite cavité (20) dans un état de pré-assemblage avant que ladite surface d'engagement annulaire (16) ne se mette en contact avec la surface faisant face au soufflet et s'étendant radialement (42).

4. Bille et articulation à rotule comprenant un soufflet d'étanchéité selon la revendication 1 dans lesquels ledit soufflet d'étanchéité (10) présente une surface d'étanchéité d'axe d'articulation (14) engagée avec ledit axe d'articulation (38).

5. Bille et articulation à rotule comprenant un soufflet d'étanchéité selon la revendication 4 comprenant en outre un anneau de serrage (48) agissant sur un extérieur (12) du soufflet (10) pour appliquer une force au soufflet (10) de telle manière que la surface d'étanchéité d'axe d'articulation (14) s'engage statiquement avec ledit axe d'articulation (38).

6. Procédé pour former une bille et articulation à rotule comprenant un soufflet d'étanchéité comprenant :
la fourniture d'un axe d'articulation à bille (36, 38) disposé dans un logement de joint à bille (44) via un insert de palier (45) intermédiaire ;
la fourniture d'une pièce de liaison (40) avec une surface faisant face au soufflet d'étanchéité et s'étendant radialement (42) présentant une ouverture pour recevoir l'axe d'articulation à bille (38) ;
la fourniture d'un soufflet (10) comprenant une première extrémité de liaison avec une surface de liaison de logement annulaire (15) et une autre extrémité avec une surface d'engagement annulaire (16) présentant une cavité (20) au moins partiellement remplie de lubrifiant (22),
**caractérisée en ce que**
ladite cavité est une rainure (20) avec une ouverture annulaire sous la forme d'un écart à entrée rétrécie (26) avec une partie à battant (30) sur chaque côté de ladite ouverture afin de restreindre le mouvement du lubrifiant (22) depuis ladite cavité (20) jusqu'à l'assemblage ;
la liaison du soufflet (10) au logement (44) ;
le déplacement dudit axe d'articulation à bille (36, 38) dans l'ouverture de la pièce de liaison (40) et la mise en contact de ladite surface d'engagement annulaire (16) dudit soufflet (10) à ladite surface faisant face au soufflet et s'étendant radialement (42) de ladite pièce de liaison pour libérer du lubrifiant (22) de ladite cavité (20) en un endroit situé entre ladite surface d'engagement annulaire (16) et ladite surface s'étendant radialement (42) de ladite pièce de liaison (40).

7. Procédé selon la revendication 6, dans lequel ladite cavité présente une surface d'engagement annulaire (16) fermée par l'un matériau dudit soufflet d'étanchéité (10) et une membrane (70) appliquée sur ledit soufflet d'étanchéité, ladite surface d'engagement annulaire s'ouvrant pour permettre la libération du lubrifiant (22) à l'assemblage.

8. Procédé selon la revendication 6, dans lequel ledit soufflet d'étanchéité (10) sur ladite cavité présente une partie de retenue de lubrifiant définie par l'un écart rétréci (26) et une barrière de matériau à une entrée de ladite cavité (29), ladite surface de retenue de lubrifiant (22) agissant pour retenir au moins une partie dudit lubrifiant dans ladite rainure de bague glissante dans un état pré-assemblé avant que ladite surface d'engagement annulaire (16) ne se mette en contact avec la surface faisant face au soufflet et s'étendant radialement (42).
